# DEMANDE DE BREVET EUROPEEN

(11) **EP 2 210 479 A1**
(43) Date de publication de la demande: **28.07.2010**
(21) Numéro de dépôt: 10305014.2
(22) Date de dépôt: 06.01.2010
(51) Int. Cl.: A01G 9/02

(54) **Dispositif de culture de végétaux**

(30) Priorité: 21.01.2009 FR 0900247
(71) Demandeur: Avance Technologique Choletaise, 49280 Mazieres en Mauges (FR)
(72) Inventeur: Dufort, Christophe, 49300 Cholet (FR)
(74) Mandataire: Laget, Jean-Loup

(57) **Abrégé**

L'invention concerne un dispositif de culture de végétaux comprenant au moins un bac (1) se présentant sous forme d'un corps de récipient comportant au moins un fond (2) et des parois (3) latérales périphériques délimitant une cavité de réception des végétaux.

Ce dispositif est **caractérisé en ce que** le bord (5) supérieur du corps de bac comporte au moins une échancrure délimitant, dans au moins l'une des parois (3) latérales du bac, une ouverture (6) de chargement/déchargement des végétaux dudit bac, cette ouverture (6) étant munie d'au moins un élément (7) de fermeture, de préférence étanche, tel qu'une trappe ou porte, apte à passer d'une position ouverte à une position fermée, et inversement, de ladite ouverture (6).

## Description

La présente invention concerne un dispositif de culture de végétaux, de préférence d'arbustes.

Elle concerne plus particulièrement un dispositif comprenant au moins un bac, de préférence à réserve d'eau, se présentant sous forme d'un corps de récipient comportant au moins un fond et des parois latérales périphériques délimitant une cavité de réception des végétaux, ladite cavité étant de préférence divisée en au moins deux compartiments superposés, le compartiment inférieur étant apte à recevoir de l'eau.

De tels bacs de culture à ouverture de chargement/déchargement des végétaux par le dessus sont bien connus à ceux versés dans cet art. Toutefois, on observe un certain nombre d'inconvénients, en particulier lors de la culture d'arbustes avec de tels bacs. Les principaux inconvénients sont liés à l'obligation de rempoter régulièrement le bac. Lors de cette opération de rempotage, il est nécessaire d'extraire l'arbuste avec sa motte du bac pour le transférer dans un bac de plus grande dimension. Cette opération est rendue difficile en raison du poids de la motte. Traditionnellement, pour extraire l'arbuste et sa motte du bac, on dispose des sangles autour du tronc de l'arbuste puis on soulève l'ensemble. Ces sangles ont pour inconvénient de stresser l'arbuste, voire de l'abîmer. Parallèlement, on constate un développement important du système racinaire qui peut venir en prise avec la grille de cloisonnement du bac entre compartiment inférieur de réserve d'eau et compartiment supérieur de réception du substrat de culture. Ce développement racinaire augmente la difficulté d'extraction du végétal de son bac. Par ailleurs, ce développement racinaire amène parfois à un "chignonnage", c'est-à-dire un enroulement sur elles-mêmes des racines qui peut entraîner une asphyxie de l'arbuste.

Un but de la présente invention est donc de proposer un bac de culture dont la conception permet de faciliter les opérations de rempotage et limiter, voire supprimer les phénomènes de "chignonnage" observés lors de la culture d'arbustes.

Un autre but de la présente invention est de proposer un dispositif de culture dont la conception permet de réduire les risques d'endommagement de l'arbuste lors des différentes phases de culture dudit arbuste.

A cet effet, l'invention a pour objet un dispositif de culture de végétaux, de préférence d'arbustes, ledit dispositif comprenant au moins un bac, de préférence à réserve d'eau se présentant sous forme d'un corps de récipient comportant au moins un fond et des parois latérales périphériques délimitant une cavité de réception des végétaux, ladite cavité étant de préférence divisée en au moins deux compartiments superposés, le compartiment inférieur étant apte à recevoir de l'eau, **caractérisé en ce que** le bord supérieur du corps de bac comporte au moins une échancrure délimitant, dans au moins l'une des parois latérales du bac, une ouverture de chargement/déchargement des végétaux dudit bac, cette ouverture étant munie d'au moins un élément de fermeture, de préférence étanche, tel qu'une trappe ou porte apte à passer d'une position ouverte à une position fermée, et inversement, de ladite ouverture.

Grâce à la réalisation d'une ouverture supplémentaire dans au moins l'une des parois latérales du bac, le bac est conçu pour un chargement/déchargement latéral, en particulier frontal, en sus d'un chargement/déchargement par le dessus. Il est ainsi possible, grâce à cette ouverture latérale, en particulier frontale, de permettre à l'opérateur de "piquer" directement le dessous de la motte de l'arbuste avec les fourches d'un chariot élévateur et de soulever l'ensemble afin de le sortir du bac. Ainsi, on s'affranchit de l'utilisation de sangles autour du tronc de l'arbuste, lesdites sangles pouvant potentiellement abîmer ledit arbuste.

De préférence, l'intérieur du corps du bac comporte au moins quatre points d'ancrage ou d'accrochage d'une extrémité d'un lien apte à ceinturer au moins partiellement un végétal à cultiver, lesdits points d'ancrage étant actifs par paire, les points d'ancrage d'une paire étant disposés, de préférence symétriquement, de part et d'autre d'un plan sensiblement parallèle au plan de l'ouverture de chargement dudit bac ou orthogonal à la direction de déplacement de végétaux à travers ladite ouverture de manière à permettre, par ladite ouverture de chargement, un accès aisé à au moins l'un des points d'ancrage de chacune des paires.

Dans le cas de quatre points d'ancrage, on utilise deux liens de ceinturage, à raison d'un lien par paire de points d'ancrage. Chaque point d'ancrage est, de préférence, disposé au voisinage d'un angle du bac de forme générale parallélépipédique. Les points d'ancrage disposés dans les angles les plus proches de l'ouverture latérale de chargement/déchargement des végétaux sont aisément accessibles en position ouverte de ladite ouverture. Chacun de ces deux points reçoit un lien différencié de sorte que le décrochage d'une extrémité de chacun des liens du point correspondant permet ensuite d'extraire l'arbuste sans que le lien, resté accroché par son autre extrémité à un autre point d'ancrage, n'empêche une telle extraction du bac.

De préférence, dans le cas d'un dispositif du type dans lequel le végétal à cultiver comporte une motte entourée d'un revêtement de type feuille, le dispositif comporte des moyens de maintien dudit revêtement à l'état enroulé autour de la motte sous forme d'un corps tubulaire du genre manchon, lesdits moyens de maintien étant formés de deux éléments positionnables chacun à une extrémité dudit manchon pour une prise en sandwich dudit manchon interposable entre lesdits éléments, chaque élément étant muni de moyens d'assemblage par emboîtement pour un assemblage par emboîtement à recouvrement avec une extrémité dudit manchon, à l'état rapproché desdits éléments dudit manchon.

Ces moyens de maintien assurent, en parallèle d'un maintien à l'état enroulé de la feuille de revêtement, un cerclage du végétal qui empêche tout endommagement de la motte du végétal par les liens de ceinturage.

L'invention sera bien comprise à la lecture de la description suivante d'exemples de réalisation, en référence aux dessins annexés dans lesquels :

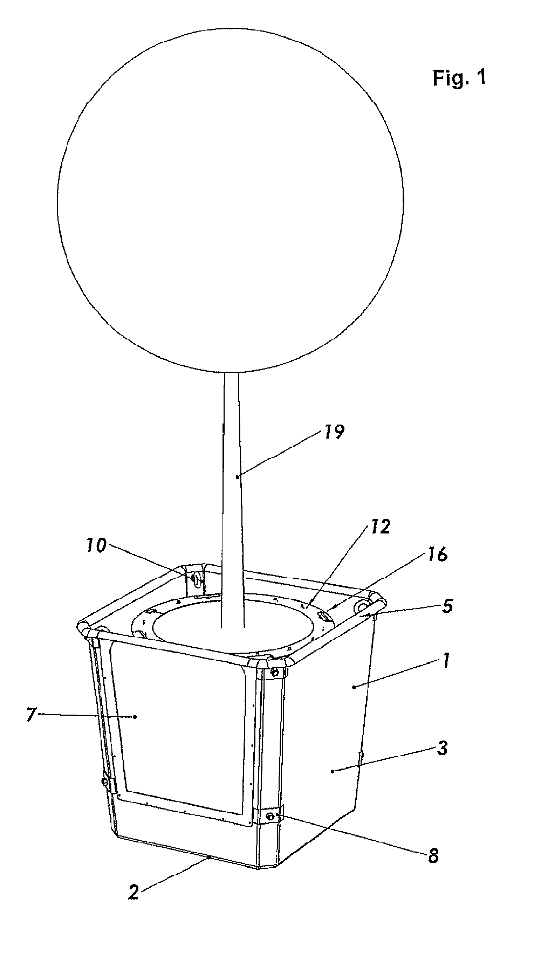

la figure 1 représente une vue schématique en perspective d'ensemble d'un dispositif de culture conforme à l'invention ;
la figure 2 représente une vue en perspective d'un bac de culture seul à l'état ouvert de l'ouverture de chargement/déchargement latérale ;
la figure 3 représente une vue en perspective d'un bac de culture seul à l'état fermé de l'ouverture de chargement/déchargement latéral ;

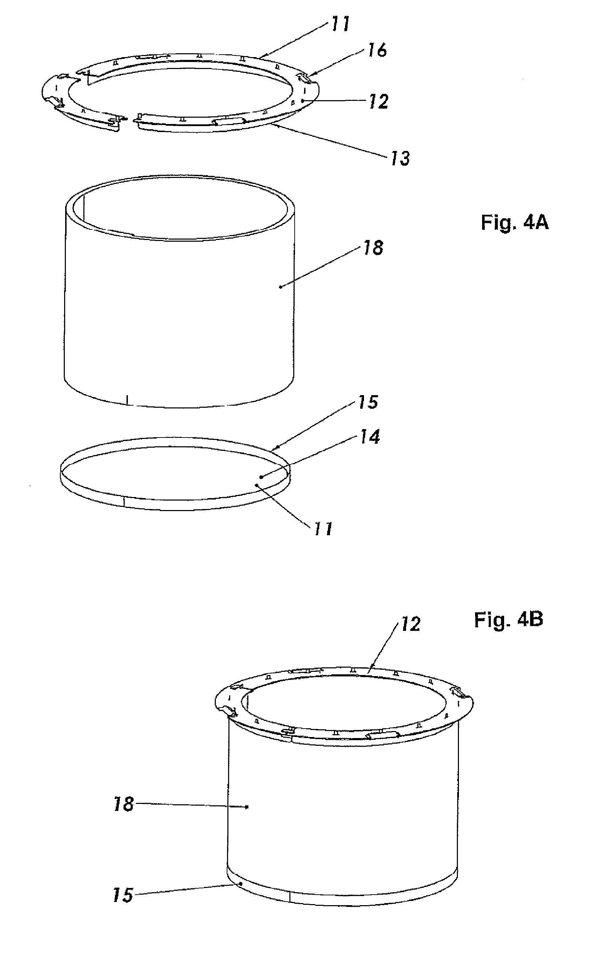

la figure 4A représente une vue en perspective du revêtement de la motte et de ses moyens de maintien en position éclatée desdits éléments ;
la figure 4B représente une vue en perspective du revêtement de la motte et de ses moyens de maintien à l'état assemblé desdits éléments et
la figure 5 représente une vue en coupe du dispositif à l'état ancré dudit végétal.

Comme mentionné ci-dessus, l'invention concerne un dispositif de culture de végétaux 19, en particulier d'au moins un végétal tel qu'un arbuste. Ce dispositif comprend au moins un bac 1 de culture se présentant sous forme d'un corps de récipient comportant au moins un fond 2 et des parois 3 latérales périphériques délimitant une cavité de réception des végétaux à face du dessus au moins partiellement ouverte pour permettre le passage des végétaux cultivés dans ledit bac. Dans les exemples représentés, le bac est de forme parallélépipédique et peut être réalisé en matière de synthèse, par exemple par roto-moulage. Ce bac 1 de culture est généralement un bac à réserve d'eau. A cet effet, la cavité de réception des végétaux est de préférence divisée à l'aide d'une grille horizontale 4 ou similaire en au moins deux compartiments superposés, le compartiment inférieur étant apte à recevoir de l'eau tandis que le compartiment supérieur est apte à recevoir un substrat de culture, tel que de la terre.

De manière caractéristique à l'invention, le bord 5 supérieur du corps de récipient dudit bac, servant à la délimitation de la face du dessus ouverte dudit bac, comporte au moins une échancrure délimitant, dans au moins l'une des parois 3 latérales du bac, une ouverture 6 de chargement/déchargement des végétaux 19 dudit bac. Cette ouverture 6 est munie d'au moins un élément 7 de fermeture, de préférence étanche, tel qu'une trappe ou porte, apte à passer d'une position ouverte à une position fermée, et inversement, de ladite ouverture 6. Grâce à la présence supplémentaire de cette ouverture latérale, le chargement/déchargement du bac peut s'opérer indifféremment par le dessus du bac ou par ladite ouverture.

Dans les exemples représentés, l'élément 7 de fermeture de l'ouverture 6 de chargement/déchargement du bac est formé par une trappe de type guillotine montée mobile à coulissement le long d'au moins une glissière 17 équipant au moins une partie des bords de l'ouverture 6 de chargement/déchargement du bac.

En position fermée, cette trappe est, en partie supérieure, verrouillée au reste du bac par deux boulons. Dans les exemples représentés, le contour de l'échancrure présente une forme en U et les glissières s'étendent sur la totalité du U pour former deux glissières verticales parallèles et une glissière inférieure horizontale contre laquelle le bord inférieur de l'élément de fermeture prend appui en position fermée dudit élément 7. Le bord supérieur de l'élément 7 de fermeture est conformé pour, en position fermée, assurer une continuité du bord 5 supérieur du bac de culture. Ainsi, lorsque le bord 5 supérieur du bac est ourlé, comme représenté aux figures, le bord supérieur de la trappe est également ourlé. Grâce à cette ouverture 6 de chargement/déchargement, l'opérateur peut, comme mentionné ci-dessus, extraire le végétal du bac à l'aide d'un chariot élévateur dont les fourches pénètrent directement au niveau du dessous de la motte dans ladite motte.

Dans le cas d'un dispositif de culture de végétal du type dans lequel le végétal 19 à cultiver comporte une motte entourée d'un revêtement 18 de type feuille, le dispositif comporte des moyens 11 de maintien dudit revêtement 18 à l'état enroulé autour de la motte sous forme d'un corps tubulaire du genre manchon. Ces moyens 11 de maintien sont formés de deux éléments 12, 14 positionnables chacun à une extrémité dudit manchon pour une prise en sandwich dudit manchon interposable entre lesdits éléments 12, 14. Chaque élément 12, 14 est muni de moyens d'assemblage par emboîtement pour un assemblage par emboîtement à recouvrement avec une extrémité dudit manchon, à l'état rapproché desdits éléments 12, 14 dudit manchon.

La présence de ces moyens de maintien permet d'éviter tout phénomène de "chignonnage" qui consiste en un enroulement sur elles-mêmes des racines principales dudit végétal jusqu'à asphyxie dudit végétal. Par ailleurs, de tels moyens de maintien évitent tout stress de l'arbre par les moyens d'ancrage qui seront décrits ci-après.

Il doit être noté que le revêtement de type feuille de la motte est bien connu à ceux versés dans cet art. Ce revêtement est généralement un revêtement de type toile perméable à l'air et à l'eau.

Dans les exemples représentés, l'un 12 des éléments 12, 14 des moyens 11 de maintien, positionnable à l'extrémité dite supérieure du manchon, est formé d'une collerette, généralement en au moins deux parties, ladite collerette 12 étant munie, sur sa face apte à être tournée vers ledit manchon, d'un bord 13 tombé formant un rebord circulaire à l'intérieur duquel est apte à s'insérer l'extrémité supérieure du manchon.

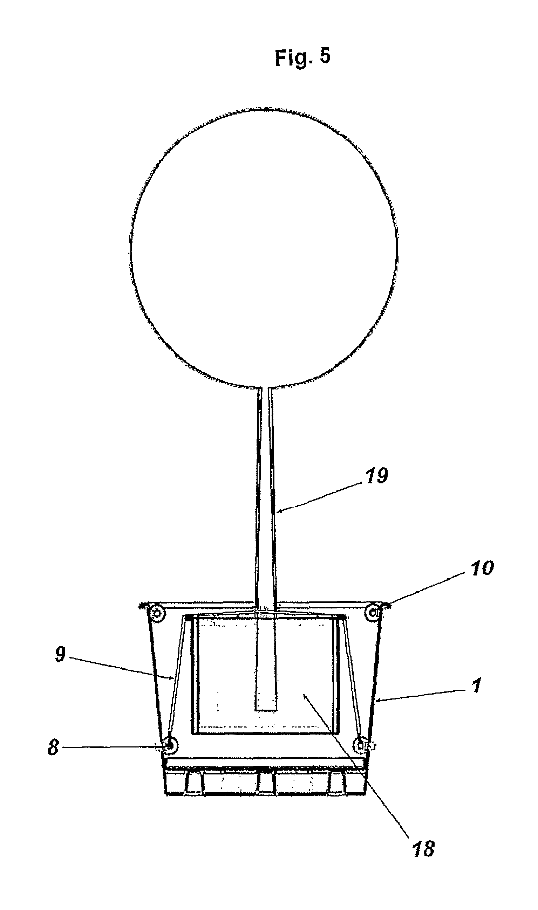

La collerette 12 est munie sur son bord circonférentiel externe d'encoches 16 radiales externes. Ces encoches servent de logement à un lien d'ancrage apte à ceinturer au moins partiellement le végétal à cultiver, comme l'illustre la figure 5. Les bords de ces encoches empêchent tout glissement du lien contre la collerette. De préférence, ces encoches sont réparties de manière équidistante sur le pourtour circonférentiel externe de la collerette. Dans l'exemple représenté, ces encoches sont au nombre de quatre et servent par paire à la réception d'un lien de ceinturage de l'arbuste. Cette disposition des encoches permet de répartir les efforts des liens sur la collerette tout en évitant un appui direct du lien sur la motte au risque de détériorer cette dernière.

L'un 14 des éléments 12, 14 des moyens 11 de maintien, positionnable à l'extrémité dite inférieure du manchon, est formé d'une platine munie sur sa face apte à être tournée vers ledit manchon d'un bord 15 relevé formant un rebord circulaire à l'intérieur duquel est apte à s'insérer l'extrémité inférieure du manchon.

Grâce à ces moyens 11 de maintien, le revêtement 18 de la motte est parfaitement tenu à l'état enroulé. Lorsque le végétal grandit et que la motte grossit, il suffit de changer les moyens de maintien en les remplaçant par une collerette et une platine avec un rebord circulaire formé par le bord tombé ou le bord relevé de plus grand diamètre et de dérouler le revêtement sans avoir à le changer de sorte qu'à nouveau, le stress du végétal est réduit lors des phases de transplantation dudit végétal.

Pour un maintien du végétal à l'intérieur du bac, l'intérieur du corps du bac comporte au moins quatre points 8 d'ancrage ou d'accrochage d'une extrémité d'un lien 9 apte à ceinturer au moins partiellement un végétal 19 à cultiver, lesdits points 8 d'ancrage étant actifs par paire, les points 8 d'ancrage d'une paire étant disposés, de préférence symétriquement, de part et d'autre d'un plan sensiblement parallèle au plan de l'ouverture de chargement dudit bac ou orthogonal à la direction de déplacement de végétaux à travers ladite ouverture 6 de manière à permettre par ladite ouverture 6 de chargement un accès aisé à au moins l'un des points 8 d'ancrage de chacune des paires.

Ainsi, dans l'exemple représenté à la figure 5, on utilise deux liens de ceinturage du végétal agissant en opposition. Le premier lien entoure partiellement le végétal et vient, par chacune de ses extrémités, s'ancrer en deux points disposés de part et d'autre d'un plan parallèle à l'ouverture 6 de chargement/déchargement du bac, de sorte que l'un des points est positionné proche de l'ouverture 6. Un deuxième lien entoure partiellement le tronc du végétal en exerçant sur le tronc une force d'appui opposée à celle exercée par le premier lien. De manière similaire à ce premier lien, ce deuxième lien vient, par chacune de ses extrémités, s'ancrer en deux points disposés de part et d'autre d'un plan parallèle à l'ouverture 6 de chargement/déchargement du bac de sorte que l'un des points est positionné proche de l'ouverture 6. Grâce à cette disposition, chaque lien peut être aisément désolidarisé du bac à l'état ouvert de l'élément de fermeture de l'ouverture 6 car, pour chaque lien, l'un des points d'ancrage du bac est aisément accessible. Ces deux liens qui, vus de dessus, forment deux C entrelacés dont la zone d'intersection délimite le passage du végétal, assurent le maintien du végétal en position dressée à l'intérieur dudit bac.

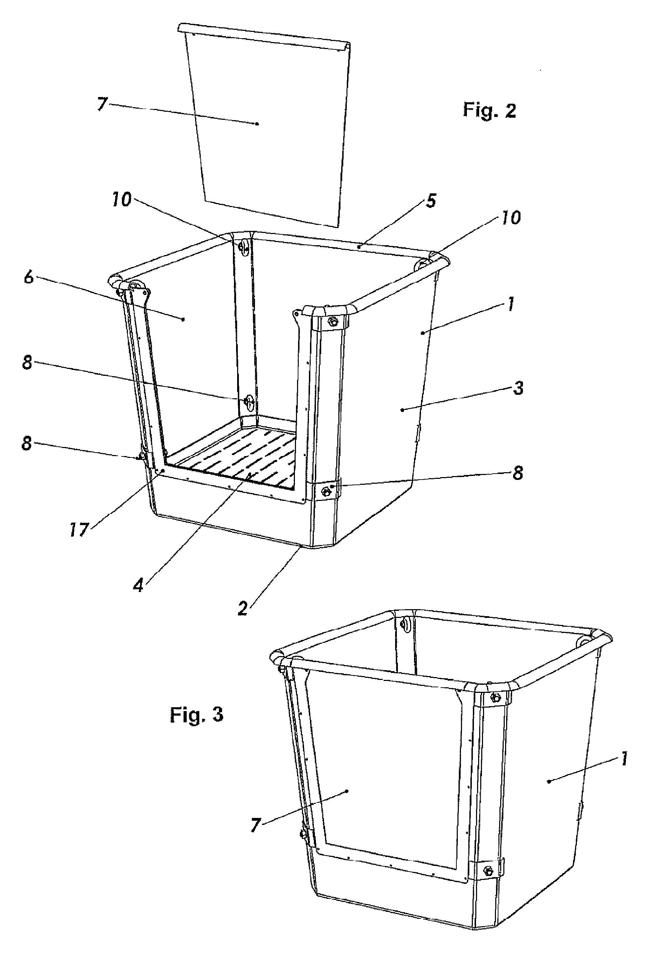

Comme l'illustre la figure 2, l'intérieur du corps de bac comporte en outre, disposés à un niveau supérieur à celui des points 8 d'ancrage ou d'accrochage de lien 9 de ceinturage des végétaux, des points 10 d'ancrage ou d'accrochage de moyens de levage et de manutention du bac.

Généralement, au moins l'un des points 8, 10 d'ancrage ou d'accrochage du bac affecte la forme d'un anneau.

Dans les exemples représentés, chaque point d'ancrage affecte la forme d'un anneau. Le bac est donc équipé de huit points d'ancrage ou d'accrochage disposés par paire dans chaque coin ou angle intérieur du bac.

De préférence, le dispositif de culture comporte en outre un cache-pot de type bac d'orangerie à l'intérieur duquel le bac 1 de culture à réserve d'eau est positionnable. Ce cache-pot n'a pas été représenté aux figures.

Grâce à la conception du dispositif de culture tel que mentionné ci-dessus, la transplantation du végétal d'un bac à un autre s'avère aisée et sans stress pour ledit végétal. En effet, le procédé de transplantation dudit végétal peut comprendre les étapes suivantes :
- une étape d'extraction du bac de culture de son cache-pot grâce aux anneaux de levage,
- une étape d'ouverture de l'ouverture 6 de chargement/déchargement latéral par enlèvement de l'élément 7 de fermeture,
- une étape de désolidarisation d'une extrémité de chacun des liens de ceinturage du tronc de l'arbuste,
- une étape d'extraction de l'arbuste du bac à l'aide par exemple d'un chariot à fourches,
- une étape de désolidarisation des moyens de maintien du revêtement de la motte,
- une étape de mise en place de nouveaux moyens de maintien de dimension supérieure,
- une étape de repositionnement du végétal dans le même bac de culture ou dans un bac de plus grande dimension,
- une étape de fermeture de l'ouverture 6 de chargement/déchargement du bac,
- une étape de repositionnement du bac dans un cache-pot.

Toutes ces étapes permettent de préserver l'intégrité de la motte et d'éviter toute asphyxie des végétaux

## Revendications

1. Dispositif de culture de végétaux (19), de préférence d'arbustes, ledit dispositif comprenant au moins un bac (1), de préférence à réserve d'eau, se présentant sous forme d'un corps de récipient comportant au moins un fond (2) et des parois (3) latérales périphériques délimitant une cavité de réception des végétaux, ladite cavité étant de préférence divisée en au moins deux compartiments superposés, le compartiment (4) inférieur étant apte à recevoir de l'eau,
**caractérisé en ce que** le bord (5) supérieur du corps de bac comporte au moins une échancrure délimitant, dans au moins l'une des parois (3) latérales du bac, une ouverture (6) de chargement/déchargement des végétaux (19) dudit bac, cette ouverture (6) étant munie d'au moins un élément (7) de fermeture, de préférence étanche, tel qu'une trappe ou porte, apte à passer d'une position ouverte à une position fermée, et inversement, de ladite ouverture (6).

2. Dispositif selon la revendication 1,
**caractérisé en ce que** l'intérieur du corps du bac comporte au moins quatre points (8) d'ancrage ou d'accrochage d'une extrémité d'un lien (9) apte à ceinturer au moins partiellement un végétal (19) à cultiver, lesdits points (8) d'ancrage étant actifs par paire, les points (8) d'ancrage d'une paire étant disposés, de préférence symétriquement, de part et d'autre d'un plan, sensiblement parallèle au plan de l'ouverture (6) de chargement dudit bac ou, orthogonal à la direction de déplacement de végétaux à travers ladite ouverture (6) de manière à permettre par ladite ouverture (6) de chargement un accès aisé à au moins l'un des points (8) d'ancrage de chacune des paires.

3. Dispositif selon la revendication 2,
**caractérisé en ce que** l'intérieur du corps de bac comporte en outre, disposés à un niveau supérieur à celui des points (8) d'ancrage ou d'accrochage de lien (9) de ceinturage des végétaux, des points (10) d'ancrage ou d'accrochage de moyens de levage et de manutention du bac.

4. Dispositif selon l'une des revendications 2 et 3,
**caractérisé en ce qu'**au moins l'un des points (8, 10) d'ancrage ou d'accrochage du bac affecte la forme d'un anneau.

5. Dispositif selon l'une des revendications 1 à 4, du type dans lequel le végétal (19) à cultiver comporte une motte entourée d'un revêtement (18) de type feuille,
**caractérisé en ce qu'**il comporte des moyens (11) de maintien dudit revêtement (18) à l'état enroulé autour de la motte sous forme d'un corps tubulaire du genre manchon, lesdits moyens (11) de maintien étant formés de deux éléments (12, 14) positionnables chacun à une extrémité dudit manchon pour une prise en sandwich dudit manchon interposable entre lesdits éléments (12, 14), chaque élément (12, 14) étant muni de moyens d'assemblage par emboîtement pour un assemblage par emboîtement à recouvrement avec une extrémité dudit manchon, à l'état rapproché desdits éléments (12, 14) dudit manchon.

6. Dispositif selon la revendication 5,
**caractérisé en ce que** l'un (12) des éléments (12, 14) des moyens (11) de maintien, positionnable à l'extrémité dite supérieure du manchon, est formé d'une collerette, généralement en au moins deux parties, ladite collerette (12) étant munie, sur sa face apte à être tournée vers ledit manchon, d'un bord (13) tombé formant un rebord circulaire à l'intérieur duquel est apte à s'insérer l'extrémité supérieure du manchon.

7. Dispositif selon la revendication 6,
**caractérisé en ce que** la collerette (12) est munie sur son bord circonférentiel externe d'encoches (16) radiales externes.

8. Dispositif selon l'une des revendications 5 à 7,
**caractérisé en ce que** l'un (14) des éléments (12, 14) des moyens (11) de maintien, positionnable à l'extrémité dite inférieure du manchon, est formé d'une platine munie sur sa face apte à être tournée vers ledit manchon d'un bord (15) relevé formant un rebord circulaire à l'intérieur duquel est apte à s'insérer l'extrémité inférieure du manchon.

9. Dispositif selon l'une des revendications 1 à 8,
**caractérisé en ce que** l'élément (7) de fermeture de l'ouverture (6) de chargement/déchargement du bac est formé par une trappe de type guillotine montée mobile à coulissement le long d'au moins une glissière (17) équipant au moins une partie des bords de l'ouverture (6) de chargement/déchargement du bac.

10. Dispositif de culture selon l'une des revendications 1 à 9,
**caractérisé en ce qu'**il comporte en outre un cache-pot de type bac d'orangerie à l'intérieur duquel le bac (1) de culture à réserve d'eau est positionnable.
